# EUROPEAN PATENT APPLICATION

(11) **EP 1 675 058 A2**
(43) Date of publication of application: **28.06.2006**
(21) Application number: 05292733.2
(22) Date of filing: 19.12.2005
(51) Int. Cl.: G06Q 10/00

(54) **Work management system**

(30) Priority: 22.12.2004 JP 2004370871
(71) Applicant: CASIO COMPUTER CO., LTD., Shibuya-ku, Tokyo 151-8543 (JP)
(72) Inventor: Otsuka, Motoi, Casio Computer Co., Ltd., Hamura-shi, 205-8555 Tokyo (JP); Kurosawa, Kazuo, Casio Computer Co., Ltd., Hamura-shi, 205-8555 Tokyo (JP)
(74) Representative: Uchida, Kenji

(57) **Abstract**

A headquarters manager' s terminal 12 is used to prepare work instruction information and to transfer the prepared information to a headquarters server 11, and the headquarters server 11 sends the work instruction information to a mobile terminal 23 through a store server 21. The mobile terminal 23 is used to prepare work report information for reporting activities performed in accordance with the work instruction, and to send the headquarters server 11 the work report information with a photographed image of work site attached to. The headquarter server 11 arranges and stores the work instruction information and work report information accompanying the photographed image, both being associated with each other, in a work instruction information file. The headquarter manager's terminal 12 reads out the work instruction information file to display the work report information associated with the work instruction information. The invention allows a person to work referring to the work instruction displayed on the mobile terminal, and also allows the manager to save processing effort in preparing work report information with a photographed image attached to. Since the work instruction information and work report information with a photographed image attached to are displayed in a correlated manner with each other on the manager's terminal, the manager can easily confirm a relationship between the work instruction information and work report information with the photographed image attached to.

## Description

The present invention relates to a work management system which transfers work instruction to a mobile terminal, receives work report information from the mobile terminal, and associates the received work report information with the work instruction information to store same for a management purpose.

In recent, it is possible in business areas to prepare business report bearing image data. In various business areas, a terminal apparatus provided with a digital camera is used to take a picture at a work site, and sends the picture to the headquarters through a network to prepare a business report including image data. For example, a store supporting system is well known, in which a route-sales man or woman takes pictures of a sales floor of a store before and after checking is made, when he or she visits the store, and sends the pictures together with certain data from a terminal apparatus to a headquarters through a network to prepare a report on the sales floor (Refer to Japanese Laid-open Patent Specification No. 2001-306786). Further, an accident-car repair estimating system is also known, in which a damaged part of an accident car is photographed at the accident scene, and data explaining a degree of the damage and photographed images of the accident care are sent from a terminal apparatus to a headquarters through a network to estimate repair costs at the headquarters (Refer to Japanese Patent Specification No. 2818152).

In the systems disclosed in the above Patent Documents, a business report including an image data can be made, but it is assumed in each system that certain data is transferred to the headquarters together with a picture of the work site, and at the headquarters the business report is prepared using a personal computer. Therefore, various sorts of editing works are required at the headquarters, such as manually sorting and classifying a number of pictures, attaching the pictures to report sentences, and further attaching an image file to the business file, whereby a lot of times and manual effort are consumed in preparing the business report bearing a photographed image. Further, when a number of pictures are classified and arranged at the headquarters, it is necessary to confirm one by one what object has been photographed, for what purpose the picture has been photographed, or whether the picture has been photographed in a required manner, whereby a large amount of labor is required at the headquarters and there causes a risk that the pictures are deceived.

The present invention provides a system in which, when receiving and managing work reports which are prepared by persons in charge to explain results of their works carried out in accordance with work instructions, a manager is allowed to confirm a relationship between the previously dispatched work instruction and the received work report accompanying an image which has been photographed by the person in accordance with the work instruction.

According to one aspect of the present invention, there is provided a work management system which comprises a management terminal for giving a work instruction, and a mobile terminal for receiving the work instruction, and which receives from the mobile terminal and manages results of work carried out in accordance with the work instruction, wherein the management terminal comprises input means for inputting and preparing work instruction information designating contents of work to be carried out, and sending means for sending the mobile terminal the work instruction information prepared with the input means, and the mobile terminal comprises display means for displaying the work instruction information sent from the management terminal, report means for inputting and preparing work report information indicating results of work carried out in accordance with the work instruction information displayed by the display means, and transferring means for transferring a photographed image of a work site together with the work report information prepared with the report means, wherein the management terminal associates the work instruction information with the work report information with the photographed image attached to, received from the mobile terminal, to store and manage both pieces of information in a correlated manner with each other, and displays the work instruction information associated with the work report information with the photographed image attached to, in response to an instruction given to output the work report information.

The work management system according to the present invention comprises the management terminal for inputting and preparing work instruction information designating contents of work to be carried out, and for sending the work instruction information to a mobile terminal to be instructed, and the mobile terminal for outputting and displaying the work instruction information received from the management terminal, for inputting and preparing work report information indicating results of work carried out in accordance with the work instruction information, and for attaching photographed image of a work site to the prepared work report information to send the work report information with the photographed image attached to, wherein the management terminal stores and manages the work instruction information and the work report information with the photographed image attached to, received from the mobile terminal, in a correlated manner with each other, and displays the work instruction information associated with the work report information with the photographed image attached to, in response to an instruction given to output the work report information. Therefore, the work management system allows a person in charge of carrying out work in accordance with the work instruction information to work referring to the displayed work instruction information, and further allows a manager to save the trouble of preparing the work report information accompanying an image, and to easily confirm the relationship between the work report information and work instruction information, when the work report is output. Therefore, the whole system can be operated smoothly and reasonably, and will be of practical use.

Fig. 1 is a block diagram schematically showing a whole configuration of a store supporting system.

Fig. 2 is a view showing a data structure of work instruction information 13 prepared using a headquarters manager's terminal 12.

Fig. 3 is a view showing a data structure of work report information 25 prepared using a mobile terminal 23, and a data structure of additional information 26 to be attached to the work report information 25.

Fig. 4 is a view showing contents of a record contained in a user master table 27 provided in a store server 21.

Fig. 5 is a view showing contents of a record in work instruction information file 14 provided in a headquarters server 11.

Fig. 6 is a block diagram showing a fundamental configuration of a client terminal (headquarters manager's terminal) 12.

Fig. 7 is a block diagram showing a fundamental configuration of a mobile terminal 23.

Fig. 8 is a flow chart of operation of the headquarters manager's terminal 12, which starts at the time when a power is turned on.

Fig. 9 is a flow chart of the operation of the headquarters manager' s terminal 12, following that shown in Fig. 8.

Fig. 10 is a flow chart of the operation of the headquarters manager's terminal 12, following that shown in Fig. 9.

Fig. 11 is a flow chart of processes performed to send and/or receive data between the headquarters server 11 and the headquarters manager's terminal 12.

Fig. 12 is a flow chart showing operation, which the mobile terminal 23 performs upon receipt of work instruction information 13.

Fig. 13A is a view showing a picture of a list of work-records.

Fig. 13B is a view showing a picture of a list of work-records with thumbnails of photographed images.

Fig. 14 is a view showing an individual display switched from the display of a list of work records.

Now, embodiments of the present invention will be described in detail with reference to the accompanying drawings.

The embodiments of the present invention serve as a work management system for managing work instructions including photographed images, and are applied to a store supporting system which supports works to be carried out in a store such as a convenience store and supermarket.

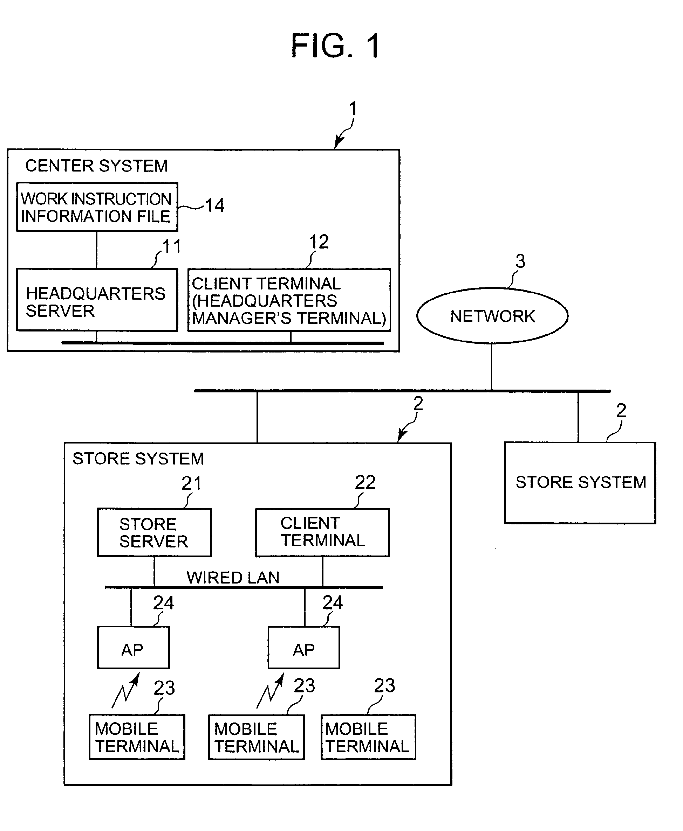

Fig. 1 is a block diagram schematically showing a whole configuration of the store supporting system.

The store supporting system comprises a system environment in which a center system 1 that is built in a headquarters office to administrate stores operated on a national scale is connected with store systems 2 each built in the stores through a wide-area communication network (communication network such as an intranet) 3. A headquarters sever 11 installed in the center system 1 and store servers 21 installed in the store systems 2 are arranged to send and/or receive data digitized (or packet data) in accordance with HTTP protocol using TCP/IP communication protocol and the like.

The center server 1 comprises the headquarters sever 11, client terminals 12 used by managers at the headquarters, and work-instruction information file 14. The headquarters is a higher organization, such as a head office and central office, having a function of administrating plural stores.

The headquarters sever 11 serves to store and control all the information relating to operation of the stores, including commodity management, personnel management, order management, and the like. Further, the headquarters sever 11 is a server unit, which has various sorts of server functions including a data-base server function, Web server function and the like and is used to aggregate and analyze sales for supporting operation of the stores and administrating store management.

The client terminal 12 (hereinafter, referred to as "headquarters manager's terminal") is operated by the manager at the headquarters to input and/or prepare work instruction information.

The headquarters manager's terminal 12 is used to input and/or prepare work instruction information, using VMD (Visual Merchandising Displaying method) for visually enhancing representation effects in the store, and to send such work instruction information prepared based on VMD to a store clerk in charge at the store system 2 through the headquarters servers 11. The "work instruction information based on VMD" is used by the manager at the headquarters to give the store clerk an instruction relating to a sales promotion method effective in attracting attention and interest of customers, including instruction of how to display commodities on store shelves aiming at visual effects. The store clerk re-arranges the commodity display on the shelves in accordance with the received "work instruction information based on VMD" and takes a picture showing how the store shelves are changed. The store clerk prepares work report information, and sends the center system 1 the prepared work report information together with the picture of the store shelves. The work instruction information and work report information will be described in detail later.

The store system 2 is a communication system established in the store such as a convenience store, supermarket and the like, and comprises the store server 21 prepared as the core of the store, a client terminal 22 used by a store manager, and mobile information terminals (hereafter, "mobile terminal") 23 for store clerks. The store server 21 and the client terminal 22 are connected to each other through the wired LAN, and also connected with mobile terminals 23 via an access points 24 installed at plural locations in the store by means of a wireless LAN for sending and/or receiving data. The store server 21 serves as a server unit for storing and managing all the information about operation of the store, including commodity management, personnel management, order management, and the like, and has various sorts of server functions including a data-base server function, Web server function and the like. The mobile terminals 23 comprise personal data assistants PDA), handy terminals and the like, provided with a photographing function (camera function), communication function, and Web browser function. Note that, incase the store manager uses the mobile terminal 23, the store manager is referred to as a store clerk.

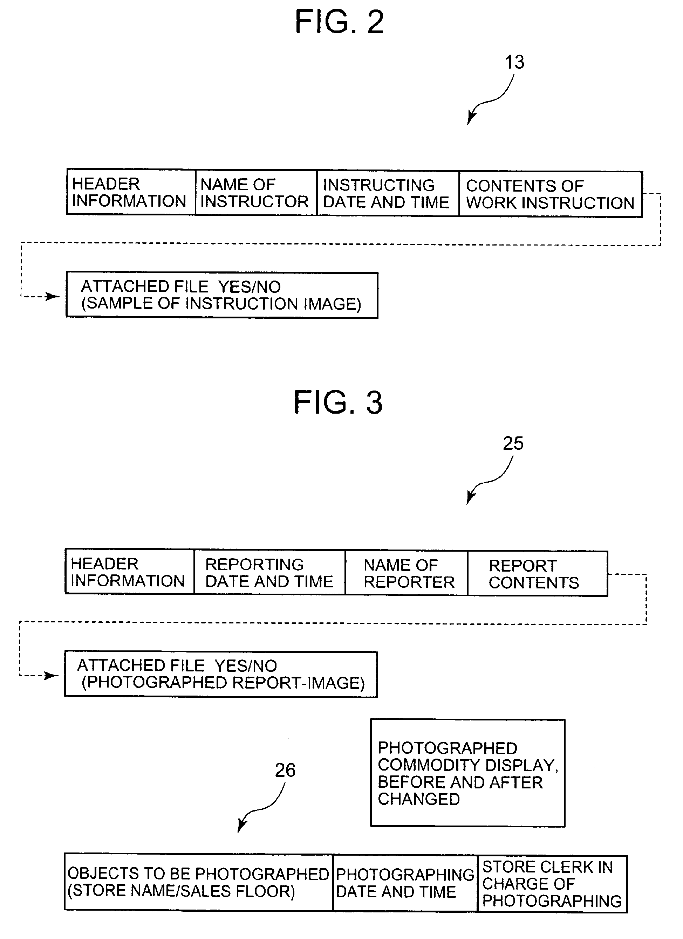

Fig. 2 is a view showing a data construction of the work instruction information 13 input and prepared by means of the headquarters manager's terminal 12.

As shown in Fig. 2, the work instruction information 13 contains items such as "header information", "name of instructor", "instructing date and time", "contents of work instruction", "attached file (sample image), yes/no", and the like. The item of "header information" includes a communication addressee to which information is to be sent, the item of "name of instructor" includes a name of the manager, and the item of "instructing date and time" includes a date and time when instruction is given. In the item of "contents of work instruction" is included a work instruction (input sentence) explaining in detail how to display or arrange commodities on the shelves. The item of "attached file, yes/no" includes data telling whether a photographed sample image of commodities displayed on the store shelves is attached as a work example or not.

The work instruction information 13 input and prepared by means of the headquarters manager's terminal 12 is transferred to the headquarters server 11 and registered in the work instruction information file 14. The headquarters server 11 reads out the work instruction information 13 from the work instruction information file 14 and sends it to the addressee or the mobile terminal 23 of the store clerk in charge through the store server 21 every predetermined time scheduled for sending information.

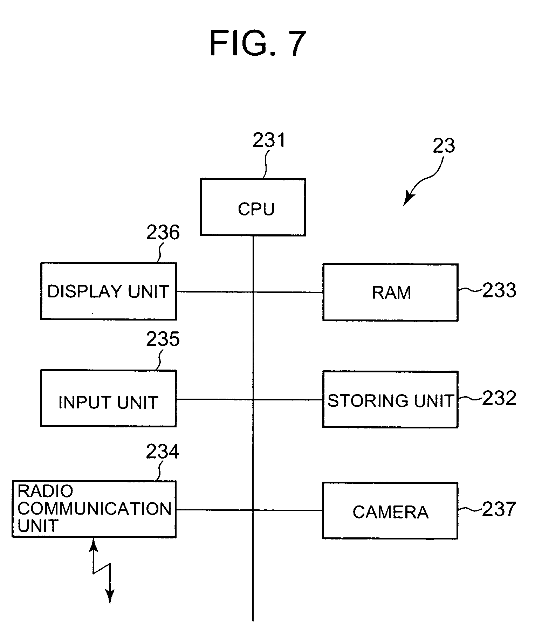

When received the work instruction information 13 sent from the headquarters server 11 through the access point 24, the mobile terminal 23 displays the received information 13 on its display unit 236 (shown in a block diagram of Fig. 7) . The store clerk re-arranges or changes the commodity display on the store shelves as instructed by the work instruction information 13 displayed on the mobile terminal. Further, the store clerk prepares work report information 25 (refer to Fig. 3) showing the results of his or her work, and takes a picture of changed commodity display on the store shelves. The work report information 25 prepared by the store clerk is sent together with the photographed image to the headquarters server 11.

Fig. 3 is a view showing a data construction of the work report information 25 and that of additional information 26 to be attached to the work report information 25, both information being input and prepared by means of the mobile terminal 23.

The work report information 25 contains items such as "reporting date and time", "name of reporter", "contents of report", and "attached file yes/no (photographed report-image) "in addition to the item of "header information", to which a communication addressee is set. The "reporting date and time" represents a date of delivery of the work report information 25. The item of "name of reporter" includes a name of a person who prepares work-report. In the item of "contents of report" is included a report (input sentence) explaining in detail the results of work or how the commodity display on the store shelves is re-arranged or changed. The item of "attached file yes/no (photographed report-image)" represents whether photographed images are attached to or not, which images shows the commodity displays before and after changed in accordance with the received work instruction information, respectively.

When the photographed images are attached to the work report information 25 to be sent to the headquarters server 11, additional information 26 is attached to the work report information 25. As shown in Fig. 3, the additional information 26 contains items of "object to be photographed (store name, sales floor)", "photographing date and time", and "store clerk in charge of photographing". The addition data represents which store (sales floor) has been photographed, when such store has been photographed, and who has photographed such store. These items contained in the additional information are prepared automatically. In other words, by accessing to a user master file (or user master table) 27 which archives data each including such items as "name", "store code", "store name", "group name (sales floor)", which correspond respectively to the store clerks, data corresponding to "store name", "store floor", and "store clerk in charge" can be read out, and also a date and time of the system (system date and time) can be obtained as "photographing date and time".

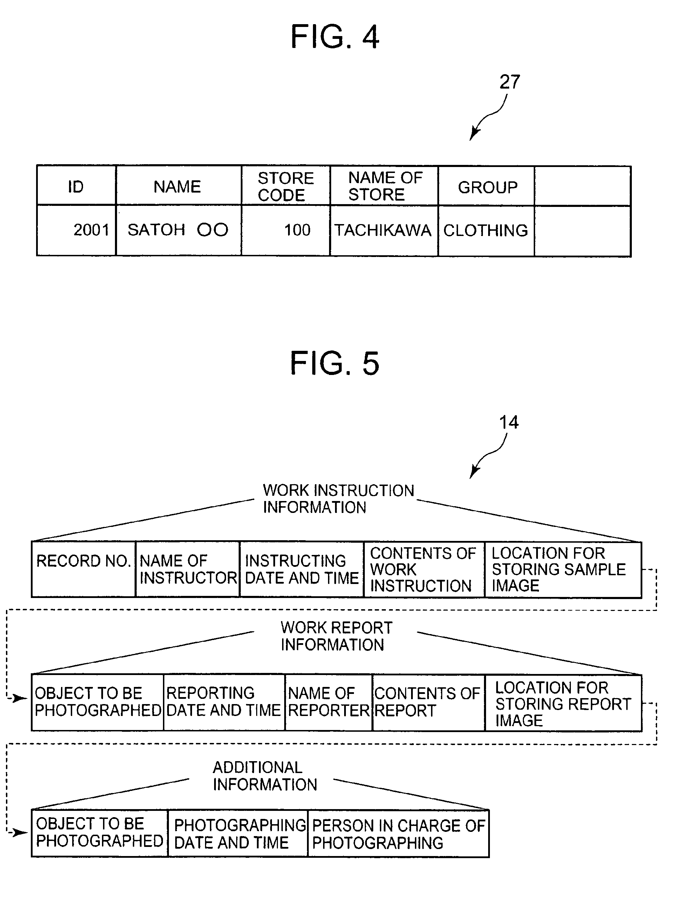

Fig. 4 is a view showing contents of the user master file (file storing information corresponding to store clerks) 27 provided in a storing unit (for example, such as a hard disk drive) built in the store server 21.

The user master file 27 archives plural sets of information corresponding respectively to store clerks, including such items as "user ID", "name of store clerk", "store code", "store name", "sales floor" corresponding to respective store clerk in charge. The items of "store name", "sales floor" represent a store and sales floor to which a store clerk belongs. A store clerk can access to the store server 21, using the mobile terminal 23 to read out information relating to himself or herself.

Fig. 5 is a view showing contents recorded in the work-instruction information file 14 connected to the headquarters server 11. Specifically, the work-instruction information file 14 is stored in a storing unit (for example, such as a hard disk drive) connected to the headquarters server 11.

The work-instruction information file 14 serves to archive plural sets of record data each including the work instruction information 13 which is input and prepared by means of the headquarters manager' s terminal 12 and the corresponding work report information 25 which is received from the mobile terminal 23 used at the store. Each record data contains items of "name instructor", "instructing date and time", "contents of work instruction", and "location for storing sample image" corresponding to the work instruction information 13, in addition to an item of "record No". Further, the record data contains items of "reporting date and time", "name of reporter", and "contents of report" corresponding respectively to the items in the work report information 25, and "location for storing report image". Furthermore, the record data contains items of "object to be photographed", "photographing date and time" and "store clerk in charge of photographing" corresponding respectively to the items in the additional information 26 attached to the work report information 25.

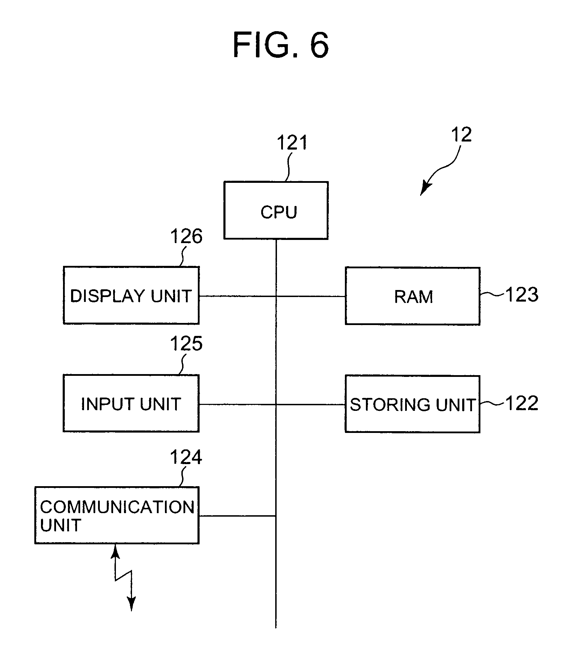

Fig. 6 is a block diagram showing a fundamental configuration of the client terminal (headquarters manager's terminal) 12 which is used by the manager at the headquarters.

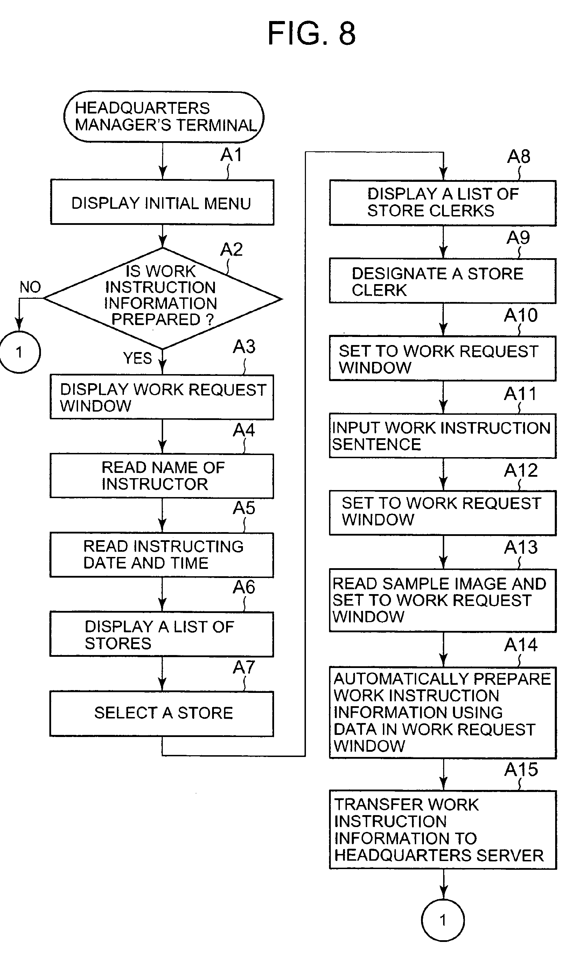

CPU 121 is a central processing unit operating in accordance with the operating system and various sorts of application software stored in a storing unit 122 to control the whole operation of the headquarters manager's terminal. The storing unit 122 comprises a magnetic memory, optical memory or semiconductor memory, and has a program area and a data area. In the program area of the storing unit 122 is stored an application program for CPU 121 to perform processes shown in flow charts of Figs. 8 to 10 to be described later, whereby the embodiment of the invention is realized.

The program and data in the storing unit 122 are loaded onto RAM 123 according to need, and data on RAM 123 is saved in the storing unit 122. Meanwhile, CPU 121 is connected through a bus line with its peripheral input/output devices including a communication unit 124, input unit 125, and display unit 126. CPU 121 controls operation of the input/output devices in accordance with an input/output program. The communication unit 124 in the headquarters manager' s terminal 12 controls communication with the store server 21 or with mobile terminals 23, and further controls communication with the headquarters server 11.

The input unit 125 is an operating unit serving as a pointing device such as a keyboard, touch panel, mouse, touch input pen, and the like. The input unit 125 is used to enter data of a character series and various sorts of commands.

The display unit 126 comprises a color liquid crystal display device, CRT display device, or plasma display device.

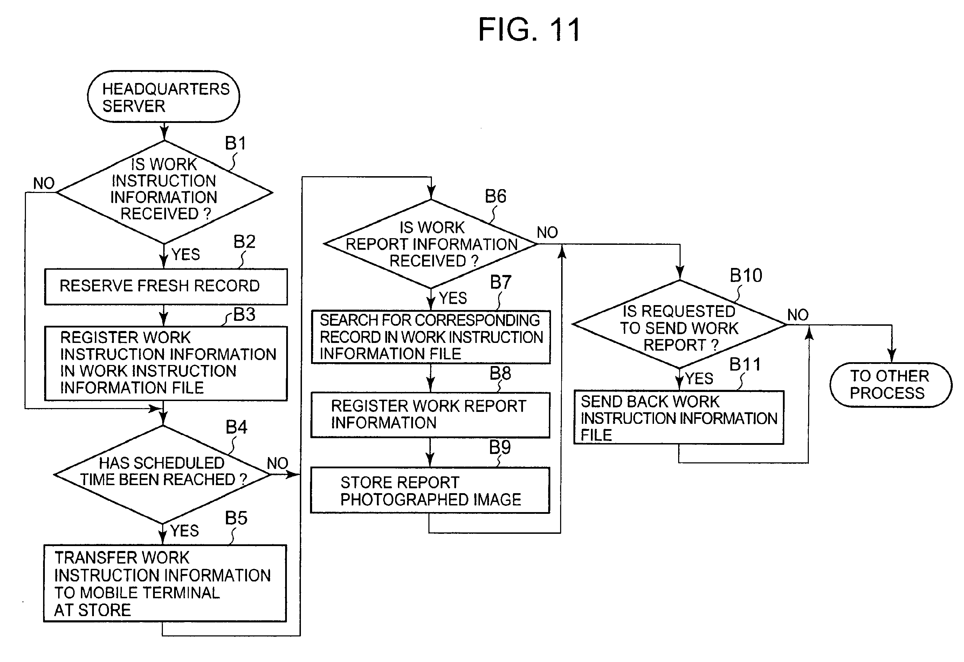

The headquarters server 11 has a configuration (not shown in the drawings) substantially same as the headquarters manager's terminal 12, comprising CPU, a storing unit, RAM, communication unit, input unit, and display unit. In the program area of the storing unit is stored the application program for realizing the embodiment of the invention in accordance with a flow chart (to be described later) shown in Fig. 11. In the data area of the storing unit is stored the work instruction information file 14.

Fig. 7 is a block diagram showing a fundamental configuration of the mobile terminal 23. Each store clerk is assigned with the mobile terminal 23. The store clerk brings the mobile terminal 23 with him or her to manage commodities or to place an order of commodities.

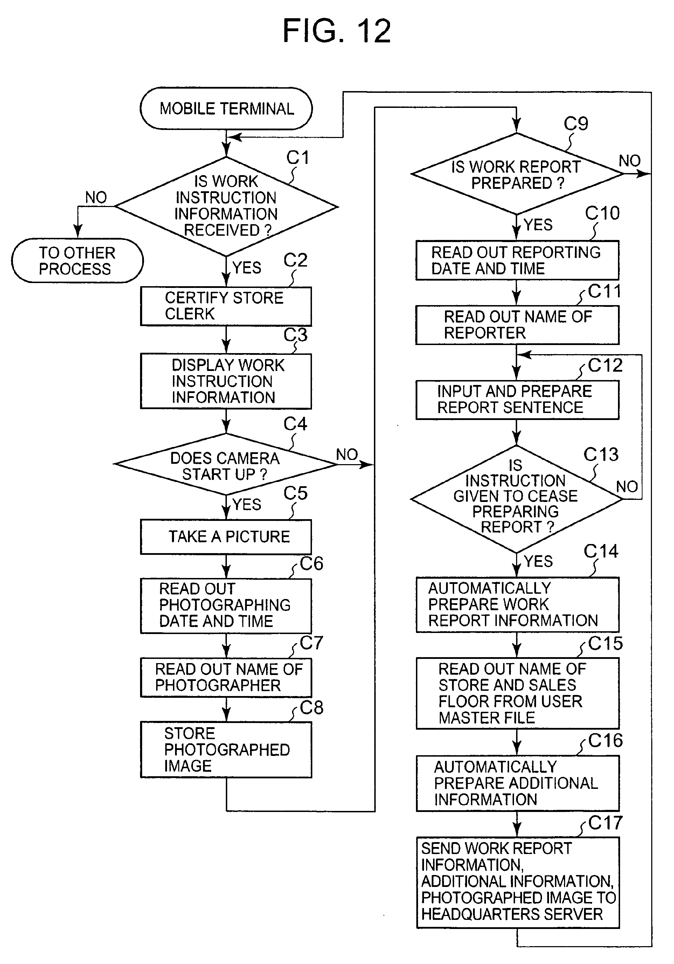

The mobile terminal 23 has CPU 231 at its core of its elements, storing unit 232, and RAM 233. Further, the mobile terminal 23 comprises its peripheral input/output devices including a radio communication unit 232, input unit 235, and display unit 236, and has a camera 237 for photographing a state of commodity display on the store shelves. The camera 237 is a digital camera having a built-in image pick-up element such as CCD image sensor, CMOS image sensor and the like. The camera 237 is used to photograph bar codes printed on a commodity label to serve as a bar code scanner to read bar-code information. The storing unit 232 has a program area and data area, and comprises a magnetic memory, optical memory or semiconductor memory, and the like. In the program area is stored an application program for CPU 231 to realize the embodiment of the invention in accordance with a flow chart (to be described later) shown in Fig. 12.

Now, operation of the store supporting system according to the embodiment of the invention will be schematically described with reference to Fig. 8 to Fig. 12. Functions described in the flow chars are stored in form of readable program codes, and operation is successively performed in accordance with the program codes. Further, operation is performed in accordance with program codes transferred through a transmission medium. In other words, unique operation of the embodiment can be performed in accordance with a program or data supplied from a recording medium or externally supplied through a transmission medium.

Figs. 8 to 10 are flow charts showing operation of the headquarters manager's terminal 12, which starts at the time when the power source is turned on.

When the power source is turned on, the headquarters manager's terminal 12 displays initial menu items at step A1 in Fig. 8. When a menu item representing "preparation of work instruction information" is chosen among the initial menu items displayed on the display unit 236 (YES at step A2), CPU 121 advances to operation at step A3 to step A14 and prepares work instruction information 13. A work request window (not shown) is displayed at step A3, and a name of an instructor (manager) is read out from among previously archived names at step A4. Further, the system date and time are read out as instructing date and time at step A5.

A list of stores is displayed at step A6. When one store to which an instruction is to be given is designated or selected among the displayed list of stores at step A7, a list of store clerks at the designated or selected store is displayed at step A8. When one store clerk to whom the instruction is to be given is designated or selected among the displayed list of store clerks, the designated store clerk is read out at step A9. The "manager (instructor) name", "instructing date and time", and "store clerk" read out at the above steps A4, A5, and A9 are set respectively to positions in the work request window at step A10.

A work instruction sentence is entered at step A11 to explain in detail how the commodities are to be displayed on the store shelves. The work instruction sentence is set to a corresponding location in the work request window at step A12. A sample image which has been photographed previously to show a commodity display on the shelves is read out and set to a corresponding location in the work request window at step A13. When all the data for the necessary items have been prepared as described above, work instruction information 13 is automatically prepared using the data corresponding to the necessary items in the work request window at step A14. The work instruction information prepared in the above manner is transferred to the headquarter server 11 through the headquarters manager's terminal 12 at step A15.

Fig. 11 is a flow chart showing processes performed by the headquarters server 11 to transfer and/or receive data from the headquarters manager's terminal 12.

Upon receipt of the work instruction information 13 from the headquarters manager's terminal 12 at step B1, the headquarter server 11 reserves a flesh record in the work instruction information file 14 at step B2, and registers data corresponding to the respective items of the work instruction information 13 in the flesh record in the work instruction information file 14 at step B3.

Then, the headquarters server 11 compares the time (scheduled time) previously set for transmission with the system date and time at step B4 to watch whether the scheduled time (a certain time after the store is closed) has been reached. When it is confirmed that the scheduled time has been reached, the headquarters server 11 reads out the work instruction information 13 from the work instruction information file 14, and sends the work instruction information 13 to the mobile terminal 23 of the store clerk through the store server 21 of the store designated as the addressee at step B5. The work instruction information 13 is transferred to the store server 21 with the item of "record No" attached to. The item of "record No." indicates a location where the work instruction information 13 is to be stored. If a flag indicating that the record has been transmitted or a flag indicating that the record has not yet been transmitted is set to each record, these flags allow the headquarters manager to confirm whether the record has been transmitted or not, whereby the record is prevented from being transmitted twice in error or the record is transmitted without failure.

Fig. 12 is a flow chart showing operation performed by the mobile terminal 23 when the mobile terminal 23 receives the work instruction information 13.

Upon receipt of the work instruction information 13 from the headquarters server 11 through the store server 21 at step C1, the mobile terminal 23 notifies of receipt of such information by flashing indication and the like, and certifies a store clerk based on an input log-in information. When the store clerk is certified as the true store clerk at step C3, CPU 231 displays the received work instruction information 13 on the display unit 236 at step C3. Then, the store clerk starts work to re-arrange or change the commodity display on the store shelves in accordance with the work instruction information 13 displayed on the mobile terminal 23, and takes a picture of the commodity display changed by himself or herself. Then, the store clerk prepares work report information 25 indicating results of his or her work. In case that the store clerk is instructed to start up the camera 237 at step C4, he or she takes a picture of the commodity display on the store shelves changed by him or her at step C5 and reads out the system date and time as a "photographing date and time" at step C6, and further reads out his or her own name among those previously archived at a predetermined position in the storing unit 232 as the "name of store clerk in charge of photographing" at step C7. Then, the store clerk stores the photographed image with the "photographing date and time" and "name of the store clerk" attached thereto at a predetermined position for storing an image in the storing unit 232 at step C8.

When the user instructs the mobile terminal 23 by operating the input unit 235 so as to prepare a work report (YES at step C9), the system date and time are reads out as a "reporting date and time" at step C10, and the name of the user is read out as a "name of reporter" at step C11. The user or store clerk operates the input unit 235 at step C12 to write a sentence explaining in detail the results of his or her work or how the commodity display is re-arranged or changed by him or her. Unless the user gives no instructing to cease preparing the report at step C13, CPU 231 returns to step C4 again to continue on preparing the report, but when the user gives a instruction of ceasing the report preparation, work report information 25 is automatically prepared on the basis of the read out data and input sentence at step C14.

The user or store clerk uses the mobile terminal 23 to access to the store server 21 through the radio communication unit 234, and searches the user master file 27 in the store server 21 for the store and sales floor where he or she belongs. The searched store and sales floor are read out as an "object to be photographed" at step C15. Additional information 26 is automatically prepared using the "photographing date and time", "name of store clerk in charge of photographing" and "object to be photographed" at step C16. CPU 231 attaches the additional information 26 and a photographed image file to the work report information 25 prepared in the above manner, and again accesses to the store server 21 using the radio communication unit 234 to transmit the work report information 25 to the headquarters server 11 through the store server 21 at step C17. At the same time, the "record No" attached to the received work instruction information is attached to work report information 25 to be transmitted to the headquarter server 11.

Upon receipt of the work report information 25 from the mobile terminal 23 through the store server 21 at step B6 in Fig. 11, the headquarters server 11 searches the work instruction information file 14 for corresponding record by the "record No" attached to the work report information 25 at step B7, and stores data corresponding to items of the work report information 25 and additional information 26 in the corresponding record of the work-instruction information file 14 to register the work report information 25 and the additional information 26 at step B8. The headquarters server 25 further stores the photographed image attached to the work report information 25 in an image file at step B9. Receiving a request for transferring the work-instruction information file 14 from the headquarters manager's terminal 12 at step B10, the headquarters server 11 transfers the work instruction information file 14 to the headquarters manager's terminal 12 which has made such request at step B11.

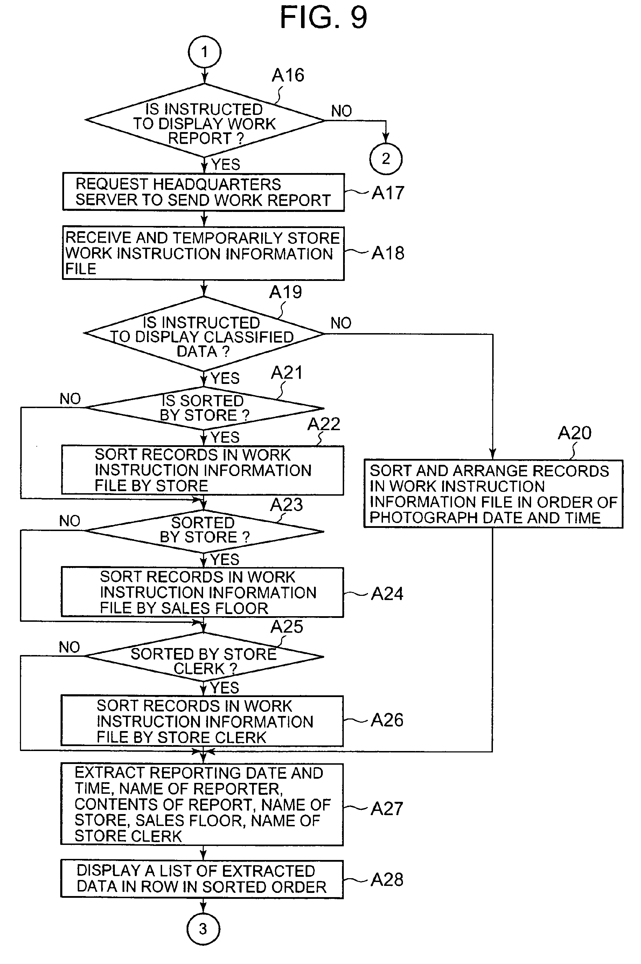

Detecting an instruction given by the manager to display the work report (YES at step A16 in Fig. 9), the headquarters manager's terminal 12 requests the headquarters server 11 to send the work report at step A17. Receiving the work instruction information file 14 which is sent back from the headquarters server 11 in response to the request, the headquarters manager' s terminal 12 temporarily stores the file 14 at step A18. Then, the headquarters manager's terminal 12 judges at step A19 whether the manager has designated a classified display. When the classified display has not been designated, the headquarters manager's terminal 12 sorts the records read out from the work-instruction information file 14 in order of photographing date and time based on the key item of "photographing date and time" at step A20.

When a display of classified stores is designated for the classified display (YES at step A21), the records read out from the work-instruction information file 14 are sorted by store based on the key item of "object to be photographed: store name" at step A22. When a display of classified sales floors is designated for the classified display (YES at step A23), the records read out from the work-instruction information file 14 are sorted by sales floor based on the key item of "object to be photographed: name of sales floor" at step A24. Similarly, when a display of classified store clerks is designated for the classified display (YES at step A23), the records read out from the work-instruction information file 14 are sorted by store clerk based on the key item of "object to be photographed: name of store clerk in charge of photographing" at step A26.

Data corresponding to items such as "reporting date and time", "name of reporter", and "contents of report" are extracted from the records sorted in the manner described above as data corresponding respectively to the items for the work report, and also data corresponding to items of "store name", "sales floor", and "store clerk" are extracted as data corresponding respectively to the items for the additional information 26 at step A27. A list of work report, in which the extracted data are complied into a list of data in row disposed in sorted order is displayed on the display unit 126 at step A28.

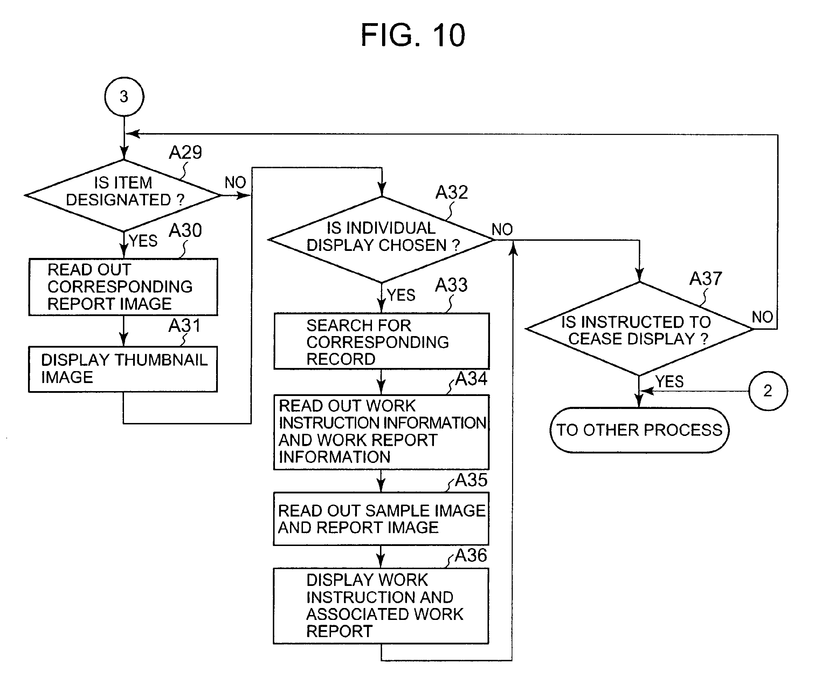

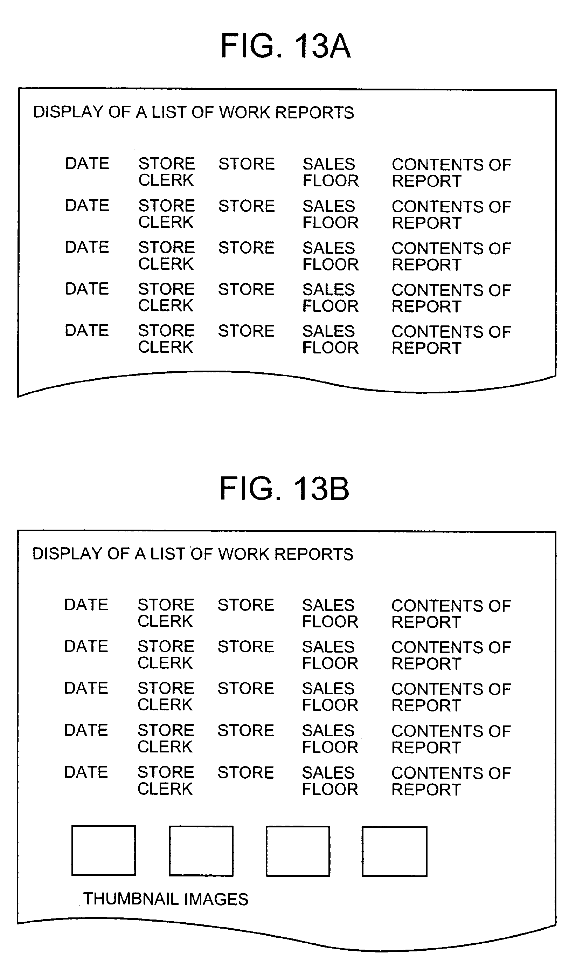

Fig. 13A is a view showing a display screen of a list of data contained in the work report, which is displayed on the display unit 126 of the headquarters manager's terminal 12. When an item such as "store name", "sales floor" or the like in the data disposed in row is designated by a user on the display screen of a list of data (YES at step A29 in Fig. 10), the work instruction information file 14 is searched through by the designated item, and report images are read out with reference to "location for storing report-image" in the record at step A30. A list of thumbnail images corresponding respectively to the read out report images is displayed within the display screen of the list of work reports displayed on the display unit 126 at step A31.

Fig. 13B is a view showing a display screen which is displayed on the display unit 126 when the "sales floor" in the first row is selected from among the list of data contained in the work report. On the display screen, thumbnail images of photographed commodity display, before and after changed, on store shelves are displayed. Modification may be made such that, when a thumbnail image is selected from among a list of thumbnail images, an image of the selected thumbnail image is enlarged and displayed.

Meanwhile, when an individual display screen is chosen by operating the input unit 125 by the user, that is, when data in an arbitrary row is designated on the display screen of a list of work reports (YES at step A32), the corresponding record is read out from the work instruction information file 14 at step A33, and work instruction information and work record information are extracted from the read out record at step A34. Further, a corresponding picture or image is read out from the record based on the "location for storing sample image" and "location for storing report image" at step A35. Then, data corresponding the respective items and a sample image contained in work instruction information and data corresponding the respective items and a report image contained in work report information are associated with each other and displayed on the one and same display screen at step S36.

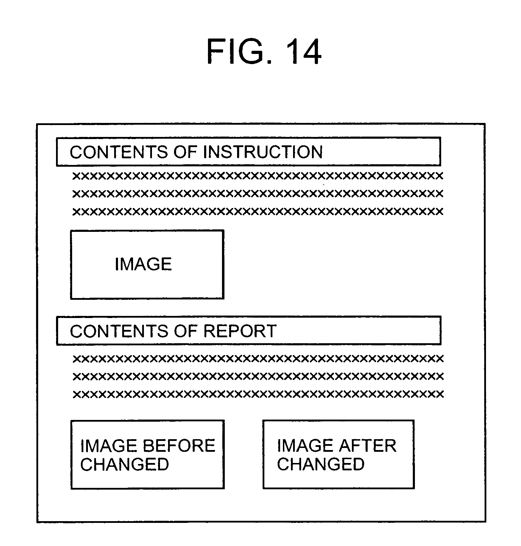

Fig. 14 is a view showing an individual display screen which is switched from the display screen of a list of work records on the display unit 126. On an upper half area of the individual display screen, data corresponding to the respective items and sample images contained in the work instruction information are displayed, and on a lower half area of the individual display screen, data corresponding to the respective items and report images contained in the work report information are displayed.

When an instruction to cease the displaying operation is given by user's operation at step A37, the headquarters manager's terminal moves to other process in response to the user's operation.
In the embodiment of the invention, when the headquarters manager prepares work instruction information 13 and enters the information to the headquarters server 11, using the headquarters manager's terminal 12, then the headquarters server 11 sends the entered work instruction information 13 to the mobile terminal 23 through the store server 21. A store clerk prepares and enters work report information 25, using the mobile terminal 23 to report the results of his or her work carried out in response to the work instruction information 13, and attaches a photographed image of the store floor to the work report information 25. The work report information 25 with the photographed image attached to is sent to the headquarters server 11, where the work report information 25 with the photographed image attached to is made to correlate with the work instruction information 13 and stored in the work-instruction information file 14. The headquarters manager's terminal 12 is arranged such that, when contents of the work instruction information file 14 are read out and displayed, the headquarters terminal 12 makes the work report information 25 correlate with the work instruction information 13 and displays the work report information 25 correlated with the work instruction information 13. With the arrangement, the store clerk at the sales floor can proceed with store work, referring to the contents of the work instruction displayed on the mobile terminal 23. Meanwhile, the manager at the headquarters is allowed to save the trouble of preparing work report information accompanying an image, and to easily confirm the relationship between the work report information 25 and work instruction information 13. Therefore, the whole system can be operated smoothly and reasonably, and will be of practical use.

When work instruction information 13 is entered and prepared, the headquarters manager's terminal 12 adds a sample image showing how to perform operation at the store to the work instruction information 13, whereby work instruction will be more specific, giving more suitable instruction. When work report information 25 is prepared responding to the work instruction information 13, the headquarters manager's terminal 12 reads out a store name and sales floor as "object to be photographed" from the user' s master table 27 of the store sever 21, and automatically prepares additional information 26, using data corresponding to the items including "photographing date and time", "store clerk in charge of photographing", and "object to be photographed". Therefore, the store clerk is not required to enter various sorts of data to complement the contents of the work report information 25 to complete the work report information 25, whereby the additional information 26 containing data corresponding to plural items can be sent together with the work report information 25 without requiring troublesome operation of the store clerk.

In case that an arbitrary item is selected or designated from among plural items which constitutes additional information 26 when the contents of the work instruction information file 14 are read out and displayed, the headquarters manager's terminal 12 reads out the corresponding record from the work instruction information file 14 in accordance with the selected item, and sorts the read out record to display the contents of the record in sorted order in a picture of a list of work-reports. When arbitrary data is selected from among the list of work-reports, the displayed picture is switched to an individual display screen for displaying the work report information 25 associated with the work instruction information 13. Therefore, when the work report information 25 is displayed, the headquarter manager can use the additional information 26, and also can switch the display screen of a list of work-reports to the individual display screen according to need and vice versa. Data can be classified depending on which the store clerk should photograph, which store or sales floor should be photographed, or when a picture should be taken.

Meanwhile, a store clerk can refer to the work instruction information 13 from the headquarters server 11 on the display unit 236 of the mobile terminal 23. When the store clerk is instructed to change or re-arrange a layout of the sales floor (commodity display on the store shelves), the clerk takes pictures of the store layout, before and after changed, and sends back the headquarters server these pictures together with the work report information 25. Therefore, referring to the pictures sent back from the mobile terminal 23, the manger at the headquarters can confirm how exactly the floor layout has been changed or re-arranged in accordance with the work instruction information 13.

In the display screen of a list of work records shown in Fig. 13A, the work report data and report images are displayed separately, but it may be possible to display the work report data and report images in a correlated state with each other. In the embodiment described above, when the plural records read out from the work instruction information file 14 are displayed, the plural records are sorted by the items of "store", "sales floor", "store clerk", and "photographing date and time" for displaying, but only records classified by "store", "sales floor", "store clerk", or "photographing date and time" may be read out from the work instruction information file 14 for displaying.

In the embodiment described above, the system according to the present invention is applied to the store supporting system in which the center system of the headquarters and the store systems are connected via the internet, but the system of the invention may be applied not only to such wide-area system as the above store supporting system but also to an in-store system provided within a store. The system according to invention is used for stores such as convenience stores, supermarkets and the like, but the system will be used to prepare and manage work schedules for doctors and nurses in a hospital and also to prepare work schedules for workers at the construction sites of the buildings.

The present invention further provides a recording medium such as CD-ROM, flexible disk, RAM card and the like in which program codes for a computer to execute the above mentioned functions are recorded. More specifically, a recording medium for storing computer-readable program codes is provided, such program codes comprising codes for realizing a function for entering and preparing work instruction information indicating contents of work; a function for transferring the prepared work instruction information to a terminal of a person to be instructed; a function for displaying the work instruction information sent from a manager's apparatus; a function for entering and preparing work report information indicating results of work carried out in accordance with the work instruction; a function for sending a photographed image of a work site together with the work report information; a function for associating the work instruction information with the work report information with the photographed image attached transferred form the terminal of the person in charge of reporting and for storing the work report information associated with the work instruction information; and a function for displaying the work report information with the photographed image attached to and the work instruction information in a correlated manner with each other, in response to an instruction given to display the work report information.

## Claims

1. A work management system which comprises a management terminal for giving a work instruction, and a mobile terminal for receiving the work instruction, and which receives from the mobile terminal and manages results of work carried out in accordance with the work instruction, wherein
the management terminal comprises input means for inputting and preparing work instruction information designating contents of work to be carried out, and sending means for sending the mobile terminal the work instruction information prepared with the input means;
the mobile terminal comprises display means for displaying the work instruction information sent from the management terminal, report means for inputting and preparing work report information indicating results of work carried out in accordance with the work instruction information displayed by the display means, and transferring means for transferring a photographed image of a work site together with the work report information prepared with the report means, wherein
the management terminal stores and manages the work instruction information and the work report information with the photographed image attached to, received from the mobile terminal, in a correlated manner with each other, and displays the work instruction information associated with the work report information with the photographed image attached to, in response to an instruction given to output the work report information.

2. The work management system according to claim 1, wherein the management terminal adds a sample image showing an example of work to be carried out to the work instruction information, when the work instruction information is input and prepared.

3. The work management system according to claim 1, wherein the mobile terminal reads out data corresponding to predetermined plural items and adds the read out data corresponding to plural items as additional information to the work report information, when the work report information is input and prepared to respond to the work instruction information.

4. The work management system according to claim 3, wherein plural pieces of work report information each with a photographed image attached to are stored, and in case that an arbitrary item is selected from among plural items constituting the additional information when the work report information is outputted, the management terminal classifies the plural pieces of work report information by data corresponding to the selected item and displays a list of sorted pieces of work report information, and switches the display screen displaying the list of sorted pieces of work report information to an individual display screen displaying the work report information and the corresponding work instruction information in a correlated manner with each other, when an arbitrary work report information is selected among the displayed list of the sorted pieces of work report information.

5. The work management system according to claim 3, wherein plural items constituting the additional information comprise information designating an object to be photographed, information designating an person in charge of carrying out work and information indicating photographing date and time.

6. The work management system according to claim 1, wherein the mobile terminal sends the work report information with images attached to, which images have been photographed before and after the work instruction information is received.

7. A management terminal connected to a mobile terminal for receiving a work instruction through a network, for receiving from the mobile terminal and managing work report information about work carried out in response to the work instruction, the management terminal comprising:
input means for inputting and preparing work instruction information designating contents of work to be carried out; sending means for sending the work instruction information prepared with the input means to the mobile terminal through the network;
receiving means for receiving work report information input with the mobile terminal and a photographed image attached to the work report information, the work report information indicating contents of work carried out in response to the work instruction information;
storing means for storing and managing the work instruction information and the work report information with photographed image attached to, received by the receiving means, in a correlated manner with each other; and
displaying means for displaying the work instruction information associated with the work report information with photographed image attached to, in response to an instruction given to output the work report information.

8. A recording medium recording a computer program for a computer to realize the functions which comprise:
a input function of inputting and preparing work instruction information designating contents of work to be carried out;
a sending function of sending the prepared work instruction information to a mobile terminal through a network;
a receiving function of receiving through the network work report information prepared with the mobile terminal and a photographed image attached to the work report information, the work report information indicating contents of work carried out in response to the work instruction information;
a storing function of storing and managing the work instruction information and the received work report information with photographed image attached to, in a correlated manner with each other; and
a reading function of reading out the work instruction information and the work report information with the photographed image attached to, in response to an instruction given to output the work report information, and of displaying the work instruction information associated with the work report information with photographed image attached to.
